# EUROPÄISCHE PATENTSCHRIFT

(11) **EP 2 496 613 B1**
(45) Veröffentlichungstag und Bekanntmachung des Hinweises auf die Patenterteilung: **01.07.2015**
(21) Anmeldenummer: 10771475.0
(22) Anmeldetag: 02.11.2010
(51) Int. Cl.: C08F 10/10, C08F 4/00

(54) **VERFAHREN ZUR HERSTELLUNG VON HOMO- ODER COPOLYMEREN**
METHOD FOR THE PRODUCTION OF HOMO- OR COPOLYMERS
PROCÉDÉ DE PRODUCTION D'HOMOPOLYMÈRES OU DE COPOLYMÈRES

(30) Priorität: 04.11.2009 EP 09174984
(43) Veröffentlichungstag der Anmeldung: 12.09.2012
(73) Patentinhaber: BASF SE, 67056 Ludwigshafen (DE)
(72) Erfinder: KÖNIG, Hannah Maria, 68161 Mannheim (DE); KROSSING, Ingo, 79114 Freiburg (DE)
(86) Internationale Anmeldenummer: PCT/EP2010/066579
(87) Internationale Veröffentlichungsnummer: WO 2011/054785

(56) Entgegenhaltungen:
- ULRICH WIETELMANN DR 1 ET AL: "Tris(oxalato)phosphorus Acid and Its Lithium Salt", CHEMISTRY - A EUROPEAN JOURNAL,, Bd. 10, Nr. 10, 17. Mai 2004 (2004-05-17), Seiten 2451-2458, XP009143621,
- PAUL W SIU ET AL: "A convenient Proton Source with a Weakly Basic Phosphorus(V) Anion", ORGANOMETALLICS,, Bd. 28, Nr. 15, 1. Januar 2009 (2009-01-01), Seiten 4491-4499, XP009143622,

## Beschreibung

Die vorliegende Erfindung betrifft ein Verfahren zur Herstellung von Homo- oder Copolymeren durch Polymerisation eines oder mehrerer ethylenisch ungesättigter Monomerer, insbesondere zur Herstellung von hochreaktiven Isobutenhomo- oder -copolymeren mit einem zahlenmittleren Molekulargewicht Mₙ von 400 bis 1.000.000 aus Isobuten oder einem Isobuten-haltigen Monomerengemisch, in flüssiger Phase in Gegenwart eines gelösten, dispergierten oder geträgerten Katalysatorkomplexes auf Basis einer Phosphorverbindung.

Unter hochreaktiven Isobutenhomo- oder -copolymeren versteht man im Unterschied zu den sogenannten niedrigreaktiven Polymeren solche Polyisobutene, die einen hohen Gehalt an terminal angeordneten ethylenischen Doppelbindungen enthalten. Im Rahmen der vorliegenden Erfindung sollen unter hochreaktiven Polyisobutenen solche Polyisobutene verstanden werden, die einen Anteil an Vinyliden-Doppelbindungen (α-Doppelbindungen) von wenigstens 60 Mol-%, vorzugsweise von wenigstens 70 Mol-% und insbesondere von wenigstens 80 Mol-%, bezogen auf die Polyisobuten-Makromoleküle, aufweisen. Unter Vinylidengruppen werden im Sinne der vorliegenden Anmeldung solche Doppelbindungen verstanden, deren Lage im Polyisobuten-Makromolekül durch die allgemeine Formel 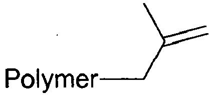 beschrieben wird, d.h. die Doppelbindung befindet sich in der Polymerkette in α-Stellung. "Polymer" steht für den um eine Isobuteneinheit verkürzten Polyisobutenrest. Die Vinylidengruppen zeigen die höchste Reaktivität, wohingegen eine weiter im Inneren der Makromoleküle liegende Doppelbindung keine oder auf jeden Fall geringere Reaktivität bei Funktionalisierungsreaktionen zeigt. Hochreaktive Polyisobutene werden unter anderem als Zwischenprodukte zur Herstellung von Additiven für Schmier- und Kraftstoffe verwendet, wie dies beispielsweise in DE-A 27 02 604 beschrieben wird.

Derartige hochreaktive Polyisobutene sind z. B. nach dem Verfahren der DE-A 27 02 604 durch kationische Polymerisation von Isobuten in flüssiger Phase in Gegenwart von Bortrifluorid als Katalysator erhältlich. Nachteilig hierbei ist, dass die dabei erhaltenen Polyisobutene eine relativ hohe Polydispersität aufweisen. Die Polydispersität PDI ist ein Maß für die Molekulargewichtsverteilung der erhaltenen Polymerketten und entspricht dem Quotient aus gewichtsmittlerem Molekulargewicht M_{w} und zahlenmittlerem Molekulargewicht Mₙ (PDI = M_{w}/Mₙ).

Polyisobutene mit einem ähnlich hohen Anteil an endständigen Doppelbindungen, jedoch mit einer engeren Molekulargewichtsverteilung sind beispielsweise nach dem Verfahren der EP-A 145 235, US 5 408 018 sowie WO 99/64482 erhältlich, wobei die Polymerisation in Gegenwart eines desaktivierten Katalysators, zum Beispiel eines Komplexes aus Bortrifluorid, Alkoholen und/oder Ethern, erfolgt. Nachteilig hierbei ist, dass bei sehr tiefen Temperaturen, oftmals deutlich unterhalb von 0°C, was einen hohen Energieaufwand verursacht, gearbeitet werden muss, um tatsächlich zu hochreaktiven Polyisobutenen zu gelangen.

Es ist bekannt, dass Katalysatorsysteme, wie sie beispielsweise in der EP-A 145 235, US 5 408 018 oder WO 99/64482 verwendet werden, zu einem gewissen Restfluorgehalt im Produkt in Form von organischen Fluorverbindungen führen. Um solche Nebenprodukte zu verringern oder ganz zu vermeiden, sollte auf Bortrifluorid-haltige Katalysatorkomplexe verzichtet werden.

In der DE-A 103 56 768 (1) werden Salze schwach koordinierender Anionen mit Bor-, Aluminium-, Gallium-, Indium-, Phosphor-, Arsen- oder Antimon-Zentralatomen, welche Fluor- und Alkoxylat-Reste enthalten, deren Herstellung und deren Verwendung unter anderem in der homogenen Katalyse, beispielsweise in der Olefin-Polymerisation, beschrieben. Als Gegenionen dienen ein- oder zweiwertige Kationen, beispielsweise Silberionen, Tetrabutylammoniumionen oder aus fluorierten Methan-Abkömmlingen erzeugte Kationen.

Aus dem Literaturartikel (2) mit dem Titel "Tris(oxalato)phosphorus Acid and Its Lithium Salts" von U. Wietelmann, W. Bonrath, T. Netscher, H. Nöth, J.-C. Panitz und M. Wohlfahrt-Mehrens in Chem. Eur. J. 2004, 10, 2451-2458, sind Umsetzungsprodukte von Phosphorpentachlorid mit jeweils drei Äquivalenten Brenzkatechin (1,2-Dihydroxybenzol) oder Oxalsäure (HOOC-COOH) bekannt, welche nach Abspaltung von fünf Äquivalenten Chlorwasserstoff unter Abstraktion eines Protons eine sechsfach am Phosphoratom Sauerstoff-koordinierte anionische Struktur ausbildet, wobei die Abstraktion des Protons durch Anlagerung desselben an ein Molekül Diethylether stabilisiert wird. Die entsprechenden exakten Strukturen dieser Umsetzungsprodukte [Tris(ortho-phenylendioxy)phosphorsäure und Tris(oxalato)phosphorsäure] sind in den Reaktionsgleichungen (2) und (5) des Dokumentes (2) wiedergegeben. Die besagten Umsetzungsprodukte werden als Katalysatoren für Friedel-Crafts-Reaktionen und in Form ihrer Lithiumsalze als Elektrolyte für nicht-wässrige Batterien empfohlen.

Aufgabe der vorliegenden Erfindung war es, ein verbessertes Polymerisationsverfahren für die Herstellung von Homo- oder Copolymeren ethylenisch ungesättigter Monomerer, insbesondere für die Herstellung von hochreaktiven Isobutenhomo- oder -copolymeren mit einem zahlenmittleren Molekulargewicht Mₙ von 400 bis 1.000.000, die vorzugsweise ein Gehalt an endständigen Vinyliden-Doppelbindungen von wenigstens 70 Mol-% aufweisen, unter Verwendung eines geeigneteren Katalysatorkomplexes, welcher als Polymerisationskatalysator dient, bereitzustellen. Ein solches Verfahren sollte einerseits eine Polymerisation bei nicht allzu tiefen Temperatur erlauben, gleichzeitig jedoch deutlich kürzere Polymerisationszeiten ermöglichen.

Die Aufgabe wurde durch ein Verfahren zur Herstellung von Homo- oder -copolymeren durch Polymerisation eines oder mehrerer ethylenisch ungesättigter Monomerer, insbesondere zur Herstellung von hochreaktiven Isobutenhomo- oder -copolymeren mit einem zahlenmittleren Molekulargewicht Mₙ von 400 bis 1.000.000, in flüssiger Phase in Gegenwart eines gelösten, dispergierten oder geträgerten Katalysatorkomplexes gelöst, welches dadurch gekennzeichnet ist, dass man als Katalysatorkomplex eine protonensaure Verbindung einsetzt, welche durch Umsetzung einer reaktiven anorganischen oder organischen fünfwertigen Phosphorverbindung mit drei Äquivalenten einer organischen alpha,beta-Dihydroxyverbindung erhältlich ist.

Unter reaktiven anorganischen oder organischen fünfwertigen Phosphorverbindungen sind solche Verbindungen zu verstehen, die eine Umwandlung in eine Verbindung gestatten, in der ein oder das zentrale Phosphoratom die Oxidationsstufe +5 aufweist und ausschließlich von Sauerstoffatomen umgeben wird. Bei einer Koordinationszahl von 6 liegt dann in der Regel eine stabile weil symmetrische oktaedrische Geometrie mit dem Phosphoratom in der Mitte und den Sauerstoffatomen auf den Eckpunkten des Oktaeders vor. Vorzugsweise enthalten die genannten anorganischen oder organischen fünfwertigen Phosphorverbindungen nur ein Phosphoratom. Vorzugsweise handelt es sich bei den als Edukten genannten fünfwertigen Phosphorverbindungen um anorganische Phosphorverbindungen, besonders bevorzugt werden hierbei Phosphorpentahalogenide wie Phosphorpentafluorid, Phosphorpentachlorid, Phosphorpentabromid oder Phosphorpentajodid.

Als organische alpha,beta-Dihydroxyverbindungen eignen sich beispielsweise 1,2-Diole wie Glykol, 1,2-Propandiol oder ähnliche zweiwertige Alkohole, alpha-Hydroxycarbonsäuren wie Glykolsäure, Milchsäure oder Mandelsäure, insbesondere jedoch 1,2-Ethandisäure (Oxalsäure) und 1,2-dihydroxyaromatische Verbindungen wie Brenzkatechin (1,2-Dihydroxybenzol), 1,2-Dihydroxynaphthalin, 2,3-Dihydroxynaphthalin und 2,3-Dihydroxychinoxalin.

In einer bevorzugten Ausführungsform des erfindungsgemäßen Verfahrens setzt man als Katalysatorkomplex eine protonensaure Verbindung ein, welche durch Umsetzung eines Phosphorpentahalogenides mit drei Äquivalenten Oxalsäure oder mit drei Äquivalenten eines unsubstituierten oder substituierten Brenzkatechins erhältlich ist. Substituierte Brenzkatechine sind beispielsweise 2,3- und 3,4-Dihydroxytoluol, 2,3-und 3,4-Dihydroxybenzylalkohol, 2,3- und 3,4-Dihydroxybenzaldehyd, 2,3- und 3,4-Dihydroxybenzoesäure, 2,3- und 3,4-Dihydroxybenzoesäureester, 2,3- und 3,4-Dihydroxybenzoesäureamide, 2,3- und 3,4-Dihydroxyhalogenbenzole, 2,3- und 3,4-Dihydroxybenzonitril, 2,3- und 3,4-Dihydroxynitrobenzol, 2,3- und 3,4-Acetophenon sowie 2,3- und 3,4-Dihydroxybenzophenon.

Die Umsetzung der reaktiven anorganischen oder organischen fünfwertigen Phosphorverbindung mit der organischen alpha,beta-Dihydroxyverbindung erfolgt unter Abspaltung der entsprechenden Äquivalente einer protonierten Abgangsgruppe, im Falle von Phosphorpentachlorid sind dies beispielsweise fünf Äquivalente Chlorwasserstoff.

Ein typische Struktur für die Katalysatorkomplexe der vorliegenden Erfindung ist das Umsetzungsprodukt eines Phosphorpentahalogenids mit 3 Mol Oxalsäure unter Abspaltung von 5 Mol Halogenwasserstoff [Tris(oxalato)phosphorsäure]. Primär bildet sich in der Regel die nachfolgend aufgezeigte Struktur I:

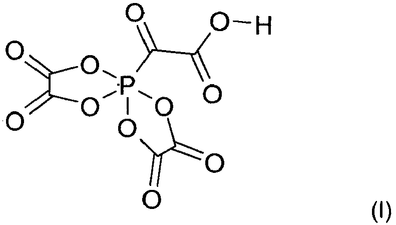

Aus solchen primären Umsetzungsprodukten wie der obigen Struktur I wird üblicherweise unter Abstraktion eines Protons eine sechsfach am Phosphoratom Sauerstoff-koordinierte anionische Struktur ausbildet, wobei die Abstraktion des einen Protons vorzugsweise durch Anlagerung desselben an ein geeignetes Solvensmolekül stabilisiert wird; eine solche sechsfach am Phosphoratom Sauerstoff-koordinierte anionische Struktur ist beispielhaft nachfolgend als Struktur II wiedergegeben:

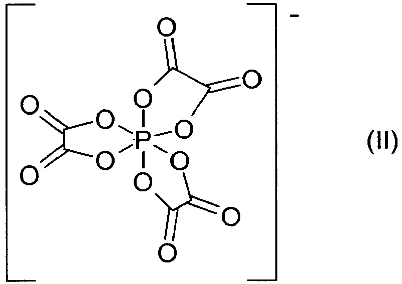

Als derartige Solvensmoleküle eignen sich zur Stabilisierung der genannten protonensauren Verbindungen, welche durch Umsetzung einer reaktiven anorganischen oder organischen fünfwertigen Phosphorverbindung mit drei Äquivalenten einer organischen alpha,beta-Dihydroxyverbindung erhältlich sind, insbesondere cyclische und offenkettige aliphatische Ether, insbesondere Tetrahydrofuran, Tetrahydropyran (Oxycyclohexan) oder Dioxan sowie Dialkylether wie Dimethylether, Diethylether, Dipropylether, Diisopropylether, Methylethylether, Methyl-n-propylether, Methylisopropylether, Methyltert.-butylether oder Ethyl-tert.-butylether. Auch Oligo- und Polyalkoxylene sowie Verbindungen mit Acetal- oder Halbacetalstrukturen können hier eingesetzt werden. In einer bevorzugten Ausführungsform wird das eine Proton im Katalysatorkomplex durch Anlagerung an einen Dialkylether stabilisiert, wobei Diethylether und Methyl-tert.-butylether hierbei die besten Ergebnisse liefern.

Derartige zur Stabilisierung geeignete Solvensmoleküle, insbesondere Ether, vor allem Dialkylether und Methyl-tert.-butylether, werden üblicherweise in der ein- bis sechsfachen, insbesondere in der ein- bis vierfachen molaren Menge, bezogen auf das abstrahierte Proton, eingesetzt. Auf den Einsatz von Solvensmolekülen kann jedoch auch verzichtet werden.

In einer bevorzugten Ausführungsform setzt man im erfindungsgemäßen Verfahren als Katalysatorkomplex durch einen Dialkylether stabilisierte Tris(oxalato)phosphorsäure ein.

In einer weiteren bevorzugten Ausführungsform setzt man im erfindungsgemäßen Verfahren als Katalysatorkomplex durch einen Dialkylether stabilisierte Tris(ortho-phenylendioxy)phosphorsäure ein.

Strukturen, analytische und spektroskopische Daten sowie Herstellverfahren für Tris-(oxalato)phosphorsäure und Tris(ortho-phenylendioxy)phosphorsäure bzw. für deren Diethylether-Komplexe sind in Dokument (2) ausführlich beschrieben.

Mit dem erfindungsgemäßen Verfahren lassen sich im Prinzip Homo- oder Copolymere aller denkbaren ethylenisch ungesättigten Monomerer, die unter protischen Polymerisationsbedingungen polymerisierbar sind, herstellen. Beispiele hierfür sind lineare Alkene wie Ethen, Propen, n-Buten, n-Penten und n-Hexen, Alkadiene, wie Butadien und Isopren, Isoalkene wie Isobuten, 2-Methylbuten-1, 2-Methylpenten-1, 2-Methylhexen-1, 2-Ethylpenten-1, 2-Ethylhexen-1 und 2-Propylhepten-1, Cycloalkene, wie Cyclopenten und Cyclohexen, aromatische Alkene wie Styrol, α-Methylstyrol, 2-, 3- und 4-Methylstyrol und 4-tert.-Butylstyrol, sowie Olefine, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2. Gemische der genannten Monomere lassen sich natürlich auch einsetzen.

Bevorzugte Monomere sind Isobuten, Isobuten-haltige Monomerengemische wie C4-Kohlenwasserstoffströme, Styrol, Styrol-haltige Monomerengemische, Styrolderivate wie α-Methylstyrol, die oben genannten Cycloalkene, die oben genannten Alkadiene sowie Gemische davon.

Besonders bevorzugte Monomere sind Isobuten, Isobuten-haltige Monomerengemische wie C4-Kohlenwasserstoffströme, Styrol, Styrol-haltige Monomerengemische sowie Gemische davon.

Die mit dem erfindungsgemäßen Verfahren herstellten Homo- und Copolymere weisen in der Regel zahlenmittlere Molekulargewichte Mₙ von 400 bis 5.000.000, vorzugsweise von 400 bis 1.000.000, insbesondere von 400 bis 500.000 und vor allem von 400 bis 250.000 auf.

Die mit dem erfindungsgemäßen Verfahren herstellten Copolymere können statistische Polymere oder Blockcopolymere sein.

Die Polymerisation zu den oben genannten Homo- oder Copolymeren kann sowohl kontinuierlich als auch diskontinuierlich durchgeführt werden.

In einer bevorzugten Ausführungsform setzt man das erfindungsgemäße Verfahren zur Herstellung von hochreaktiven Isobutenhomo- oder -copolymeren mit einem zahlenmittleren Molekulargewicht Mₙ von 500 bis 1.000.000 aus Isobuten oder einem Isobuten-haltigen Monomerengemisch ein.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind. Dementsprechend versteht man unter Isobutencopolymeren solche Polymere, die mehr als 2 Mol-% Monomere einpolymerisiert enthalten, die von Isobuten verschieden sind.

Das erfindungsgemäße Verfahren eignet sich somit zur Herstellung von nieder-, mittel- und hochmolekularen hochreaktiven Isobutenhomo- oder -copolymeren. Bevorzugte Comonomere sind hierbei Styrol, Styrolderivate wie insbesondere α-Methylstyrol und 4-Methylstyrol, Styrol- und Styrolderivate-haltige Monomerengemische, Alkadiene wie Butadien und Isopren sowie Gemische davon.

Für den Einsatz von Isobuten oder eines Isobuten-haltigen Monomerengemisches als zu polymerisierendem Monomermaterial eignet sich als Isobuten-Quelle sowohl Isobuten selbst als auch Isobuten-haltige C₄-Kohlenwasserstoffströme, beispielsweise C₄-Raffinate wie Raffinat I, C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm Butadien. Die Anwesenheit von 1-Buten sowie von cis- und trans-2-Buten ist weitgehend unkritisch. Typischerweise liegt die Isobutenkonzentration in den C₄-Kohlenwasserstoffströmen im Bereich von 40 bis 60 Gew.-%. Das Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können Monomerenmischungen von Isobuten beziehungsweise des Isobutenhaltigen Kohlenwasserstoffgemischs mit olefinisch ungesättigten Monomeren, welche mit Isobuten copolymerisierbar sind, umgesetzt werden. Sofern Monomerenmischungen des Isobutens mit geeigneten Comonomeren copolymerisiert werden soll, enthält die Monomerenmischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht Vinylaromaten wie Styrol und α-Methylstyrol, C₁-C₄-Alkylstyrole wie 2-, 3- und 4-Methylstyrol sowie 4-tert.-Butylstyrol, Alkadiene wie Butadien und Isopren sowie Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxy-ethoxy)silyl]propen, und 1-[Tri(meth-oxyethoxy)silyl]-2-methylpropen-2, sowie Vinylether wie tert.-Butylvinylether.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polyisobutenblock. Dies ist darauf zurückzuführen, dass die vinylaromatische Verbindung, speziell Styrol, signifikant schneller polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Lewissäure-Katalysatoren in flüssiger Phase durchgeführt werden.

Das erfindungsgemäße Verfahren ist sowohl für eine Durchführung bei niedrigen Temperaturen, z.B. bei -78 bis 0°C, als auch bei höheren Temperaturen, d.h. bei wenigstens 0°C, z.B. bei 0 bis 100°C, geeignet. Die Polymerisation wird vor allem aus wirtschaftlichen Gründen vorzugsweise bei wenigstens 0°C, z.B. bei 0 bis 100°C, besonders bevorzugt bei 20 bis 60°C durchgeführt, um den Energie- und Materialverbrauch, der für eine Kühlung erforderlich ist, möglichst gering zu halten. Sie kann jedoch genauso gut bei niedrigeren Temperaturen, z.B. bei -78 bis <0°C, vorzugsweise bei -60 bis -10°C, durchgeführt werden. Ein für die Praxis brauchbarer Temperaturbereich liegt bei wenigstens -60°C, z.B. bei -60 bis +40°C, insbesondere bei -45 bis +25°C.

Erfolgt die Polymerisation bei oder oberhalb der Siedetemperatur des zu polymerisierende Monomers oder Monomerengemischs, so wird sie vorzugsweise in Druckgefäßen, beispielsweise in Autoklaven oder in Druckreaktoren, durchgeführt.

Vorzugsweise wird die Polymerisation in Gegenwart eines inerten Verdünnungsmittels durchgeführt. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe wie Butan, Pentan, Hexan, Heptan, Octan und Isooctan, cycloaliphatische Kohlenwasserstoffe, wie Cyclopentan und Cyclohexan, aromatische Kohlenwasserstoffe, wie Benzol, Toluol und die Xylole, und halogenierte Kohlenwasserstoffe wie Methylchlorid, Dichlormethan und Trichlormethan, sowie Mischungen der vorgenannten Verdünnungsmittel. Bevorzugt verwendet man wenigstens einen halogenierten Kohlenwasserstoff, gegebenenfalls im Gemisch mit wenigstens einem der vorstehend genannten aliphatischen oder aromatischen Kohlenwasserstoffe. Insbesondere verwendet man Dichlormethan. Gans besonders gut hat sich als inertes Verdünnungsmittel für die Polymerisation auch eine Mischung aus Toluol und Dichlormethan bewährt. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien wie Aktivkohle, Molekularsiebe oder Ionenaustauscher.

Vorzugsweise wird die Polymerisation unter weitgehend aprotischen, insbesondere unter wasserfreien Reaktionsbedingungen durchgeführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm und insbesondere weniger als 5 ppm beträgt. In der Regel wird man daher die Einsatzstoffe vor ihrer Verwendung durch physikalische und/oder durch chemische Maßnahmen trocknen. Insbesondere hat es sich bewährt, die als Lösungsmittel eingesetzten aliphatischen oder alicyclischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel zu entfernen. Das so behandelte Lösungsmittel wird dann vorzugsweise direkt in das Reaktionsgefäß einkondensiert. In ähnlicher Weise kann man auch mit den zu polymerisierenden Monomeren, insbesondere mit Isobuten oder mit den Isobuten-haltigen Mischungen verfahren. Auch die Trocknung mit anderen üblichen Trockenmitteln wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen wie Natrium oder Kalium oder mit Metallalkylen nicht in Betracht kommt, werden mit dafür geeigneten Trocknungsmitteln, beispielsweise mit Calciumchlorid, Phosphorpentoxid oder Molekularsieb, von Wasser(spuren) befreit. In analoger Weise kann man auch diejenigen Einsatzstoffe trocknen, für die eine Behandlung mit Metallalkylen ebenfalls nicht in Betracht kommt, beispielsweise vinylaromatische Verbindungen.

Die Polymerisation des Isobutens bzw. des isobutenhaltigen Einsatzmaterials erfolgt in der Regel spontan beim Inkontaktbringen des Katalysatorkomplexes mit dem Monomer bei der gewünschten Reaktionstemperatur. Hierbei kann man so vorgehen, dass man das Monomer gegebenenfalls im Lösungsmittel vorlegt, auf Reaktionstemperatur bringt und anschließend den Katalysatorkomplex, beispielsweise als lose Schüttung, zugibt. Man kann auch so vorgehen, dass man den Katalysatorkomplex (beispielsweise als lose Schüttung oder als Festbett) gegebenenfalls im Lösungsmittel vorlegt und anschließend das Monomer zugibt. Als Polymerisationsbeginn gilt dann derjenige Zeitpunkt, zu dem alle Reaktanden im Reaktionsgefäß enthalten sind. Der Katalysatorkomplex kann sich teilweise oder vollständig im Reaktionsmedium lösen oder als Dispersion vorliegen. Alternativ kann der Katalysatorkomplex auch in geträgerter Form eingesetzt werden.

Soll der Katalysatorkomplex in geträgerter Form eingesetzt werden, wird er mit einem geeigneten Trägermaterial in Kontakt gebracht und somit in eine heterogenisierte Form überführt. Das Inkontaktbringen erfolgt beispielsweise durch Imprägnieren, Tränken, Besprühen, Bepinseln oder verwandete Techniken. Das Inkontaktbringen umfasst auch Techniken der Physisorption. Das Inkontaktbringen kann bei Normaltemperatur und Normaldruck oder auch bei höheren Temperaturen und/oder Drücken erfolgen. Durch das Inkontaktbringen geht der Katalysatorkomplex mit dem Trägermaterial physikalische und/oder chemische Wechselwirkungen, meistens elektrostatische Wechselwirkungen, ein.

Wesentlich für die Eignung als Trägermaterial im Rahmen der vorliegenden Erfindung sind auch seine spezifische Oberflächegröße und seine Porositätseigenschaften. Hierbei haben sich mesoporöse Trägermaterialien als besonders vorteilhaft herausgestellt. Mesoporöse Trägermaterialien haben in der Regel ein innere Oberfläche von 100 bis 3000 m²/g, insbesondere 200 bis 2500 m²/g, und Porendurchmesser von 0,5 bis 50 nm, insbesondere von 1 bis 20 nm.

Als Trägermaterial eignen sich prinzipiell alle festen inerten Substanzen mit großer Oberfläche, die üblicherweise als Unterlage oder Gerüst für Wirkstoff, insbesondere für Katalysatoren, dienen können. Typische anorganische Stoffklassen für solche Trägermaterialien sind Aktivkohle, Tonerde, Kieselgel, Kieselgur, Talk, Kaolin, Tone und Silikate. Typische organische Stoffklassen für solche Trägermaterialien sind vernetzte Polymermatrices wie vernetzte Polystyrole und vernetzte Polymethacrylate, Phenol-Formaldehyd-Harze oder Polyalkylamin-Harze.

Vorzugsweise ist das Trägermaterial aus Molekularsieben und Ionenaustauschern ausgewählt.

Als Ionenaustauscher können sowohl Kationen-, Anionen- als auch amphotere Ionenaustauscher verwendet werden. Bevorzugte organische oder anorganische Matrices-Typen für derartige Ionenaustauscher sind hierbei mit Divinylbenzol benetzte Polystyrole (vernetzte Divinylbenzol-Styrol-Copolymerisate), mit Divinylbenzol vernetzte Polymethacrylate, Phenol-Formaldehyd-Harze, Polyalkylamin-Harze, hydrophilisierte Cellulose, vernetztes Dextran, vernetzte Agarose, Zeolithe, Montmorillonite, Attapulgite, Bentonite, Aluminiumsilikate und saure Salze polyvalenter Metallionen wie Zirconiumphosphat, Titanwolframat oder Nickelhexacyanoferrat(II). Saure Ionenaustauscher tragen üblicherweise Carbonsäure-, Phosphonsäure-, Sulfonsäure-, Carboxymethyl- oder Sulfoethyl-Gruppen. Basische Ionenaustauscher enthalten meistens primäre, sekundäre oder tertiäre Aminogruppen, quartäre Ammoniumgruppen, Aminoethyl- oder Diethylaminoethyl-Gruppen.

Molekularsiebe haben ein starkes Adsorptionsvermögen für Gase, Dämpfe und gelöste Stoffe und sind generell auch für Ionenaustauschvorgänge einsetzbar. Molekularsiebe haben in der Regel einheitliche Porendurchmesser, die in der Größenordnung der Durchmesser von Molekülen liegen, und große innere Oberflächen, typischerweise 600 bis 700 m²/g. Als Molekularsiebe im Rahmen der vorliegenden Erfindung können insbesondere Silikate, Aluminiumsilikate, Zeolithe, Silicoalumophosphate und/oder Kohlenstoff-Molekularsiebe verwendet werden.

Ionenaustauscher und Molekularsiebe mit einer inneren Oberfläche von 100 bis 3000 m²/g, insbesondere 200 bis 2500 m²/g, und Porendurchmessern von 0,5 bis 50 nm, insbesondere von 1 bis 20 nm, sind besonders vorteilhaft.

Vorzugsweise ist das Trägermaterial aus Molekularsieben der Typen H-AIMCM-41, H-AIMCM-48, NaAIMCM-41 und NaAIMCM-48 ausgewählt. Diese Molekularsieb-Typen stellen Silikate oder Aluminiumsilikate dar, auf deren innerer Oberfläche Silanolgruppen haften, die für die Wechselwirkung mit den Katalysatorkomplex von Bedeutung sein können. Die Wechselwirkung beruht vermutlich jedoch hauptsächlich auf dem teilweisen Austausch von Protonen.

Sowohl beim Einsatz als Lösung, als Dispersion oder in geträgerter Form wird der als Polymerisationskatalysator wirksame Katalysatorkomplex in solch einer Menge eingesetzt, dass er, bezogen auf die Mengen an eingesetzten Monomeren, in einem molaren Verhältnis von vorzugsweise 1:10 bis 1:1.000.0000, vor allem von 1:50 bis 1:500.000 und insbesondere von 1:100 bis 1:100.000 im Polymerisationsmedium vorliegt.

Die Konzentration ("Beladung") des Katalysatorkomplexes im Trägermaterial liegt im Bereich von vorzugsweise 0,005 bis 20 Gew.-%, vor allem 0,01 bis 10 Gew.-% und insbesondere 0,1 bis 5 Gew.-%.

Der als Polymerisationskatalysator wirksame Katalysatorkomplex liegt im Polymerisationsmedium beispielsweise als lose Schüttung, als Wirbelbett, als Flüssigbett oder als Festbett vor. Geeignete Reaktortypen für das erfindungsgemäße Polymerisationsverfahren sind demgemäß üblicherweise Rührkesselreaktoren, Schlaufenreaktoren, Rohrreaktoren, Wirbelbettreaktoren, Wirbelschichtreaktoren, Rührtankreaktoren mit und ohne Lösungsmittel, Flüssigbettreaktoren, kontinuierliche Festbettreaktoren und diskontinuierliche Festbettreaktoren (batch-Fahrweise).

Zur Herstellung von Copolymeren kann man so vorgehen, dass man die Monomere, gegebenenfalls im Lösungsmittel, vorlegt und anschließend den Katalysatorkomplex, beispielsweise als lose Schüttung, zugibt. Die Einstellung der Reaktionstemperatur kann vor oder nach der Zugabe des Katalysatorkomplexes erfolgen. Man kann auch so vorgehen, dass man zunächst nur eines der Monomere, gegebenenfalls im Lösungsmittel, vorlegt, an schließend den Katalysatorkomplex zugibt und erst nach einer gewissen Zeit, beispielsweise wenn wenigstens 60%, wenigstens 80% oder wenigstens 90% des Monomers umgesetzt sind, das oder die weiteren Monomere zugibt. Alternativ kann man den Katalysatorkomplex, beispielsweise als lose Schüttung, gegebenenfalls im Lösungsmittel, vorlegen, anschließend die Monomere gleichzeitig oder nacheinander zugeben und dann die gewünschte Reaktionstemperatur einstellen. Als Polymerisationsbeginn gilt dann derjenige Zeitpunkt, zu dem der Katalysatorkomplex und wenigstens eines der Monomere im Reaktionsgefäß enthalten sind.

Neben der hier beschriebenen diskontinuierlichen Vorgehensweise kann man die Polymerisation auch als kontinuierliches Verfahren ausgestalten. Hierbei führt man die Einsatzstoffe, d.h. das oder die zu polymerisierenden Monomere, gegebenenfalls das Lösungsmittel sowie gegebenenfalls den Katalysatorkomplex (beispielsweise als lose Schüttung) der Polymerisationsreaktion kontinuierlich zu und entnimmt kontinuierlich Reaktionsprodukt, so dass sich im Reaktor mehr oder weniger stationäre Polymerisationsbedingungen einstellen. Das oder die zu polymerisierenden Monomere können als solche, verdünnt mit einem Lösungsmittel oder als monomerhaltiger Kohlenwasserstoffstrom, zugeführt werden.

Zum Reaktionsabbruch wird das Reaktionsgemisch vorzugsweise desaktiviert, beispielsweise durch Zugabe einer protischen Verbindung, insbesondere durch Zugabe von Wasser, Alkoholen, wie Methanol, Ethanol, n-Propanol und Isopropanol oder deren Gemische mit Wasser, oder durch Zugabe einer wässrigen Base, z.B. einer wässrigen Lösung eines Alkali- oder Erdalkalihydroxids wie Natriumhydroxid, Kaliumhydroxid, Magnesiumhydroxid oder Calciumhydroxid, eines Alkali- oder Erdalkalicarbonats wie Natrium-, Kalium-, Magnesium- oder Calciumcarbonat, oder eines Alkali- oder Erdalkalihydrogencarbonats wie Natrium-, Kalium-, Magnesium- oder Calciumhydrogencarbonat.

In einer bevorzugten Ausführungsform der Erfindung dient das erfindungsgemäße Verfahren zur Herstellung von hochreaktiven Isobutenhomo- oder -copolymeren mit einem Gehalt an terminalen Vinyliden-Doppelbindungen (α-Doppelbindungen) von wenigstens 70 Mol-%, vorzugsweise von wenigstens 80 Mol-%, besonders bevorzugt von wenigstens 85 Mol-% und insbesondere von wenigstens 90 Mol-%, z.B. von etwa 95 Mol-% oder von 100 Mol-%. Insbesondere dient es zur Herstellung von hochreaktiven Copolymeren, die aufgebaut sind aus Monomeren umfassend Isobuten und wenigstens eine vinylaromatische Verbindung und einem Gehalt an terminalen Vinyliden-Doppelbindungen (α-Doppelbindungen) von wenigstens 70 Mol-%, vorzugsweise von wenigstens 80 Mol-%, besonders bevorzugt von wenigstens 85 Mol-% und insbesondere von wenigstens 90 Mol-%, z.B. von etwa 95 Mol-% oder von 100 Mol-%, aufweisen.

Bei der Copolymerisation von Isobuten oder Isobuten-haltigen Kohlenwasserstoffschnitten mit wenigstens einer vinylaromatischen Verbindung entstehen auch bei gleichzeitiger Zugabe der Comonomere vorzugsweise Blockcopolymere, wobei der Isobutenblock in der Regel den terminalen, d.h. den zuletzt gebildeten Block darstellt.

Dementsprechend dient das erfindungsgemäße Verfahren in einer bevorzugten Ausführungsform zur Herstellung von hochreaktiven Isobuten-Styrol-Copolymeren. Vorzugsweise weisen die hochreaktiven Isobuten-Styrol-Copolymere einen Gehalt an terminalen Vinyliden-Doppelbindungen (α-Doppelbindungen) von wenigstens 70 Mol-%, besonders bevorzugt von wenigstens 80 Mol-%, stärker bevorzugt von wenigstens 85 Mol-% und insbesondere von wenigstens 90 Mol-%, z.B. von etwa 95 Mol-% oder von 100 Mol-%, auf.

Zur Herstellung solcher Copolymere wird Isobuten oder ein Isobuten-haltiger Kohlenwasserstoffschnitt mit wenigstens einer vinylaromatischen Verbindung, insbesondere Styrol, copolymerisiert. Besonders bevorzugt enthält ein solches Monomerengemisch 5 bis 95 Gew.-%, besonders bevorzugt 30 bis 70 Gew.-% Styrol.

Vorzugsweise weisen die mit dem erfindungsgemäßen Verfahren hergestellten hochreaktiven Isobutenhomo- oder -copolymere, speziell die Isobutenhomopolymere, eine Polydispersität (PDI = M_{w}/Mₙ) von 1,0 bis 4,0, vor allem von höchstens 3,0, vorzugsweise von 1,0 bis 2,5, besonders bevorzugt von 1,0 bis 2,0 und insbesondere von 1,0 bis 1,5 auf.

Vorzugsweise besitzen die mit dem erfindungsgemäßen Verfahren hergestellten hochreaktiven Isobutenhomo- oder -copolymere ein zahlenmittleres Molekulargewicht Mₙ von 400 bis 1.000.000, besonders bevorzugt von 400 bis 50.000, stärker bevorzugt von 400 bis 5000 und insbesondere von 400 bis 3000. Isobutenhomopolymere speziell besitzen noch stärker bevorzugt ein zahlenmittleres Molekulargewicht Mₙ von 400 bis 50.000 und insbesondere von 400 bis 5000, z.B. von etwa 1000 oder von etwa 2300.

Durch das erfindungsgemäße Verfahren werden ethylenisch ungesättigte Monomere, insbesondere Isobuten und isobutenhaltige Monomermischungen, die unter protischen Polymerisationsbedingungen polymerisierbar sind, mit hohen Umsätzen in kurzen Reaktionszeiten selbst bei relativ hohen Polymerisationstemperaturen erfolgreich polymerisiert. Man erhält weiterhin hochreaktive Isobutenhomo- oder -copolymere mit einem hohen Gehalt an terminalen Vinyliden-Doppelbindungen und mit einer recht engen Molekulargewichtsverteilung. Durch die Verwendung von fluorfreien Verbindungen als Polymerisationskatalysatoren werden Abwässer und Umwelt weniger belastet.

Die nachfolgenden Beispiele veranschaulichen die vorliegende Erfindung näher ohne sie zu beschränken.

### Beispiele 1 bis 4

Die in der nachfolgend beigefügten Tabelle angegebenen Mengen des durch die doppelte molare Menge an Diethylether stabilisierten Tris(oxalato)phosphorsäure-Katalysatorkomplexes der Formel [(Et₂O)₂H]⁺ [P(C₂O₄)₃]⁻ wurden jeweils in 50 ml des angegebenen Verdünnungsmittels gelöst und in einem auf -60°C temperierten Glasautoklaven vorgelegt. Anschließend wurden jeweils 3,91 g (70 mmol) Isobuten in den Glasautoklaven einkondensiert. Die Temperatur wurde auf den jeweils angegebenen Wert eingestellt. Nach 30 Minuten Reaktionszeit bei dieser Temperatur wurde die Polymerisation durch Zugabe von Isopropanol abgebrochen. Die organische Phase wurde mit Wasser gewaschen, mit Magnesiumsulfat getrocknet und anschließend im Vakuum eingeengt. Die nachfolgend beigefügte Tabelle zeigt die Ergebnisse der Umsetzungen.

| Beispiel Nr. | 1 | 2 | 3 | 4 |
|---|---|---|---|---|
| Reaktionstemperatur [°C] | 30 | 20 | -30 | -60 |
| Verdünnungsmittel | Hexan | Toluol | CH₂Cl₂ | CH₂Cl₂ |
| Katalysatormenge [mg] | 200 | 200 | 100 | 100 |
| Umsatz [%] | 32 | 40 | 90 | 100 |
| Gehalt an terminalen Vinyliden- Doppelbindungen [Mol-%] | 77,7 | 72,2 | 88,2 | 93,9 |
| Gewichtsmittleres Molekulargewicht M_{w} | 766 | 560 | 2297 | 10744 |
| Zahlenmittleres Molekulargewicht Mₙ | 516 | 403 | 1151 | 2990 |
| Polydispersität (PDI) | 1,48 | 1,39 | 2,00 | 3,59 |

### Beispiel 5

Die in der nachfolgend beigefügten Tabelle angegebenen Menge der nicht durch einen Dialkylether stabilisierten Tris(oxalato)phosphorsäure der Formel P(C₂O₄)₂(C₂O₄H) wurde in 50 ml des angegebenen Verdünnungsmittels gelöst und in einem auf -60°C temperierten Glasautoklaven vorgelegt. Anschließend wurden 6,26 g eines Raffinat I-Kohlenwasserstoffstromes, der 48 Gew.-% Isobuten enthielt, entsprechend 3,0 g (54 mmol) Isobuten, in den Glasautoklaven einkondensiert. Die Temperatur wurde auf den angegebenen Wert eingestellt. Nach 30 Minuten Reaktionszeit bei dieser Temperatur wurde die Polymerisation durch Zugabe von Isopropanol abgebrochen. Die organische Phase wurde mit Wasser gewaschen, mit Magnesiumsulfat getrocknet und anschließend im Vakuum eingeengt. Die nachfolgend beigefügte Tabelle zeigt die Ergebnisse der Umsetzungen.

| Beispiel Nr. | 5 |
|---|---|
| Reaktionstemperatur [°C] | -60 |
| Verdünnungsmittel | CH₂Cl₂ |
| Katalysatormenge [mg] | 100 |
| Umsatz [%] | 86 |
| Gehalt an terminalen Vinyliden-Doppelbindungen [Mol-%] | 84,3 |
| Gewichtsmittleres Molekulargewicht M_{w} | 7625 |
| Zahlenmittleres Molekulargewicht Mₙ | 2052 |
| Polydispersität (PDI) | 3,72 |

### Beispiel 6

Die in der nachfolgend beigefügten Tabelle angegebenen Menge des mit der vierfachen molaren Menge an Diethylether versetzten Tris(oxalato)phosphorsäure-Katalysatorkomplexes der Formel [(Et₂O)₂H]⁺ [P(C₂O₄)₃]⁻ · 2 Et₂O wurde in 50 ml des angegebenen Verdünnungsmittels gelöst und in einem auf -60°C temperierten Glasautoklaven vorgelegt. Danach wurden 6,26 g (112 mmol) Isobuten in den Glasautoklaven einkondensiert. Die Temperatur wurde auf den angegebenen Wert eingestellt. Nach 30 Minuten Reaktionszeit bei dieser Temperatur wurde die Polymerisation durch Zugabe von Isopropanol abgebrochen. Die organische Phase wurde mit Wasser gewaschen, mit Magnesiumsulfat getrocknet und anschließend im Vakuum eingeengt. Die nachfolgend beigefügte Tabelle zeigt die Ergebnisse der Umsetzungen.

| Beispiel Nr. | 6 |
|---|---|
| Reaktionstemperatur [°C] | 0 |
| Verdünnungsmittel | Toluol |
| Katalysatormenge [mg] | 500 |
| Umsatz [%] | 62 |
| Gehalt an terminalen Vinyliden-Doppelbindungen [Mol-%] | 87,2 |
| Gewichtsmittleres Molekulargewicht M_{w} | 881 |
| Zahlenmittleres Molekulargewicht Mₙ | 552 |
| Polydispersität (PDI) | 1,60 |

### Beispiel 7

Die in der nachfolgend beigefügten Tabelle angegebenen Menge des durch die äquimolare Menge an Diethylether stabilisierten Tris(oxalato)phosphorsäure-Katalysatorkomplexes der Formel [(Et₂O)₁H]⁺ [P(C₂O₄)₃]⁻ wurde in 50 ml des angegebenen Verdünnungsmittels gelöst und in einem auf -60°C temperierten Glasautoklaven vorgelegt. Anschließend wurden 6,26 g eines Raffinat I-Kohlenwasserstoffstromes, der 48 Gew.-% Isobuten enthielt, entsprechend 3,0 g (54 mmol) Isobuten, in den Glasautoklaven einkondensiert. Die Temperatur wurde auf den angegebenen Wert eingestellt. Nach 30 Minuten Reaktionszeit bei dieser Temperatur wurde die Polymerisation durch Zugabe von Isopropanol abgebrochen. Die organische Phase wurde mit Wasser gewaschen, mit Magnesiumsulfat getrocknet und anschließend im Vakuum eingeengt. Die nachfolgend beigefügte Tabelle zeigt die Ergebnisse der Umsetzungen.

| Beispiel Nr. | 7 |
|---|---|
| Reaktionstemperatur [°C] | -30 |
| Verdünnungsmittel | CH₂Cl₂ |
| Katalysatormenge [mg] | 100 |
| Umsatz [%] | 90 |
| Gehalt an terminalen Vinyliden-Doppelbindungen [Mol-%] | 91,0 |
| Gewichtsmittleres Molekulargewicht M_{w} | 2297 |
| Zahlenmittleres Molekulargewicht Mₙ | 1151 |
| Polydispersität (PDI) | 2,00 |

## Patentansprüche

1. Verfahren zur Herstellung von Homo- oder Copolymeren durch Polymerisation eines oder mehrerer ethylenisch ungesättigter Monomerer in flüssiger Phase in Gegenwart eines gelösten, dispergierten oder geträgerten Katalysatorkomplexes, **dadurch gekennzeichnet, dass** man als Katalysatorkomplex eine protonensaure Verbindung einsetzt, welche durch Umsetzung einer reaktiven anorganischen oder organischen fünfwertigen Phosphorverbindung mit drei Äquivalenten einer organischen alpha,beta-Dihydroxyverbindung erhältlich ist.

2. Verfahren nach Anspruch 1, **dadurch gekennzeichnet, dass** man als Katalysatorkomplex eine protonensaure Verbindung einsetzt, welche durch Umsetzung eines Phosphorpentahalogenides mit drei Äquivalenten Oxalsäure oder mit drei Äquivalenten eines unsubstituierten oder substituierten Brenzkatechins erhältlich ist.

3. Verfahren nach Anspruch 1 oder 2, **dadurch gekennzeichnet, dass** das eine Proton im Katalysatorkomplex durch Anlagerung an einen Dialkylether stabilisiert ist.

4. Verfahren nach den Ansprüchen 1 bis 3, **dadurch gekennzeichnet, dass** man als Katalysatorkomplex durch einen Dialkylether stabilisierte Tris(oxalato)phosphorsäure einsetzt.

5. Verfahren nach den Ansprüchen 1 bis 3, **dadurch gekennzeichnet, dass** man als Katalysatorkomplex eine durch einen Dialkylether stabilisierte Tris(ortho-phenylen-dioxy)phosphorsäure einsetzt.

6. Verfahren nach den Ansprüchen 1 bis 5 zur Herstellung von hochreaktiven Isobutenhomo- oder -copolymeren mit einem zahlenmittleren Molekulargewicht Mₙ von 400 bis 1.000.000 aus Isobuten oder einem Isobuten-haltigen Monomerengemisch.

7. Verfahren nach Anspruch 6 zur Herstellung von hochreaktiven Isobutenhomo- oder -copolymeren mit einem Gehalt an terminalen Vinyliden-Doppelbindungen von wenigstens 70 Mol-%.

8. Verfahren nach Anspruch 6 oder 7 zur Herstellung von hochreaktiven Isobutenhomo- oder -copolymeren mit einer Polydispersität von 1,0 bis 4,0.

## Claims

1. A process for preparing homo- or copolymers by polymerizing one or more ethylenically unsaturated monomers in the liquid phase in the presence of a dissolved, dispersed or supported catalyst complex, which comprises using, as the catalyst complex, a protic acid compound obtainable by reacting a reactive inorganic or organic pentavalent phosphorus compound with three equivalents of an organic alpha,beta-dihydroxy compound.

2. The process according to claim 1, wherein the catalyst complex used is a protic acid compound obtainable by reacting a phosphorus pentahalide with three equivalents of oxalic acid or with three equivalents of an unsubstituted or substituted catechol.

3. The process according to claim 1 or 2, wherein the one proton in the catalyst complex is stabilized by addition onto a dialkyl ether.

4. The process according to claims 1 to 3, wherein the catalyst complex used is tris(oxalato)phosphoric acid stabilized by a dialkyl ether.

5. The process according to claims 1 to 3, wherein the catalyst complex used is a tris(ortho-phenylenedioxy)phosphoric acid stabilized by a dialkyl ether.

6. The process according to claims 1 to 5 for preparing high-reactivity isobutene homo- or copolymers with a number-average molecular weight Mₙ of 400 to 1 000 000 from isobutene or an isobutenic monomer mixture.

7. The process according to claim 6 for preparing high-reactivity isobutene homo- or copolymers with a content of terminal vinylidene double bonds of at least 70 mol%.

8. The process according to claim 6 or 7 for preparing high-reactivity isobutene homo- or copolymers with a polydispersity of 1.0 to 4.0.

## Revendications

1. Procédé de fabrication d'homo- ou de copolymères par polymérisation d'un ou de plusieurs monomères éthyléniquement insaturés en phase liquide en présence d'un complexe catalytique dissous, dispersé ou supporté, **caractérisé en ce qu'**un composé acide protonique pouvant être obtenu par mise en réaction d'un composé de phosphore pentavalent inorganique ou organique réactif avec trois équivalents d'un composé alpha,bêta-dihydroxy organique est utilisé en tant que complexe catalytique.

2. Procédé selon la revendication 1, **caractérisé en ce qu'**un composé acide protonique pouvant être obtenu par mise en réaction d'un pentahalogénure de phosphore avec trois équivalents d'acide oxalique ou avec trois équivalents d'une brenzcatéchine non substituée ou substituée est utilisé en tant que complexe catalytique.

3. Procédé selon la revendication 1 ou 2, **caractérisé en ce que** le proton dans le complexe catalytique est stabilisé par fixation sur un éther dialkylique.

4. Procédé selon les revendications 1 à 3, **caractérisé en ce qu'**un acide tris(oxalato)phosphorique stabilisé par un éther dialkylique est utilisé en tant que complexe catalytique.

5. Procédé selon les revendications 1 à 3, **caractérisé en ce qu'**un acide tris(ortho-phénylène-dioxy)phosphorique stabilisé par un éther dialkylique est utilisé en tant que complexe catalytique.

6. Procédé selon les revendications 1 à 5, pour la fabrication d'homo- ou de copolymères d'isobutène hautement réactifs d'un poids moléculaire moyen en nombre Mₙ de 400 à 1 000 000 à partir d'isobutène ou d'un mélange de monomères contenant de l'isobutène.

7. Procédé selon la revendication 6, pour la fabrication d'homo- ou de copolymères d'isobutène hautement réactifs ayant une teneur en doubles liaisons vinylidène terminales d'au moins 70 % en moles.

8. Procédé selon la revendication 6 ou 7, pour la fabrication d'homo- ou de copolymères d'isobutène hautement réactifs ayant une polydispersité de 1,0 à 4, 0 .
